# EUROPÄISCHE PATENTSCHRIFT

(11) **EP 1 163 635 B1**
(45) Veröffentlichungstag und Bekanntmachung des Hinweises auf die Patenterteilung: **27.11.2002**
(21) Anmeldenummer: 00907573.0
(22) Anmeldetag: 16.02.2000
(51) Int. Cl.: G06K 19/077

(54) **TRAGBARER DATENTRÄGER MIT AUSBRECHBARER MINICHIPKARTE**
PORTABLE DATA SUPPORT WITH A DETACHABLE MINI CHIP CARD
SUPPORT D'INFORMATIONS PORTABLE AVEC MINI-CARTE A PUCE DETACHABLE

(30) Priorität: 17.02.1999 DE 19906569
(43) Veröffentlichungstag der Anmeldung: 19.12.2001
(73) Patentinhaber: Giesecke & Devrient GmbH, 81677 München (DE)
(72) Erfinder: HAGHIRI, Yahya, D-80797 München (DE); BARAK, Renèe-Lucia, D-82008 Unterhaching (DE)
(74) Vertreter: Klunker . Schmitt-Nilson . Hirsch
(86) Internationale Anmeldenummer: EP0001272
(87) Internationale Veröffentlichungsnummer: WO00049566

(56) Entgegenhaltungen:
- EP-A- 0 495 216
- EP-A- 0 535 436
- DE-C- 19 726 203

## Beschreibung

Die vorliegende Erfindung betrifft einen tragbaren Datenträger mit einer ausbrechbaren Minichipkarte gemäß dem Oberbegriff des Anspruchs 1.

In bekannten Mobilfunksystemen, beispielsweise einem GSM-Mobilfunksystem kann das SIM (subscriber identity module) in zwei verschiedenen Kartenformaten vorliegen. Mobiltelefone, bei denen ein häufigerer Wechsel des SIM vorgesehen ist, verwenden üblicherweise das Kartenformat ID-1, da hierbei durch die große Karte die Handhabung bei einem Wechsel vereinfacht wird. Für Mobiltelefone, bei denen ein Wechsel des SIM nur selten oder gar nicht vorgesehen ist, oder bei sehr kleinen Mobiltelefonen, hat sich das sogenannte Plug-In-SIM im ID-000-Format durchgesetzt. Um die Bereitstellung von im wesentlichen vorpersonalisierten Chipkarten für den Mobilfunkeinsatz zu erleichtern, werden die Chipkarten für den Mobilfunkbereich in der Regel mit einer Stanzung versehen, welche das Herausbrechen des Plug-In (Minichipkarte) ohne größere Umstände ermöglicht.

Aus der deutschen Offenlegungsschrift DE-OS 40 07 221 ist es bekannt, eine Minichipkarte im Format ID-000 in einer Karte mit dem Standardformat ID-1 anzuordnen, wobei die Minichipkarte von einer Stanzung, d.h. einem Freischnitt umgeben ist, bei der lediglich ein oder mehrere Stege erhalten bleiben, die die Minichipkarte im Kartenkörper halten.

Aus der europäischen Patentanmeldung EP-OS 0 495 216 ist weiterhin eine Ausweiskarte mit Mikroprozessor bekannt, bei der auf einer Standard-Chipkarte (Format ID-1) an der durch die Norm festgelegten Stelle ein Mikroprozessor mit seinen Kontaktflächen angeordnet ist. Der Mikroprozessor sowie seine Kontaktflächen sind von einem Freischnitt in Form eines Plug-In (Minichipkarte im ID-000-Format) dreiseitig umgeben, während die vierte Seite des Trägers eine scharnierartige Kerbung aufweist.

Auf diese Weise wird es ermöglicht, daß bei nicht herausgebrochenem Plug-In die Standardkarte in den Mobilfunkgeräten verwendet werden kann, welche einen öfteren Wechsel des SIM vorsehen, während bei kleineren Mobilfunkgeräten bzw. Geräten, bei denen ein Wechsel des SIM üblicherweise nicht vorgesehen ist, das herausbrechbare Plug-In als "Minichipkarte" verwendet wird.

Mit zunehmender Miniaturisierung der Mobilfunkgeräte stellt sich jedoch das Problem, daß auch die Minichipkarte im Format ID-000 noch zu groß ist.

Es ist deshalb Aufgabe der Erfindung, eine Chipkarte mit Plug-In anzugeben, welche eine nochmalige Verkleinerung der Minichipkarte zuläßt, wobei alle Kartenformate zuverlässig voneinander trennbar sind bzw. bei der ein einfaches Entfernen des Plug-In vom restlichen Kartenkörper ermöglicht wird, wobei gleichzeitig für den Fall, daß das Plug-In im restlichen Kartenkörper verbleibt, Plug-In und Kartenkörper eine stabile Einheit bilden.

Diese Aufgabe wird ausgehend von den Merkmalen des Oberbegriffs des Anspruchs 1 durch die kennzeichnenden Merkmale diesesAnspruchs gelöst.

Vorteilhafte Ausgestaltungen der Erfindung sind in den abhängigen Ansprüchen angegeben.

Der Grundgedanke der Erfindung besteht darin, daß das Plug-In im Format ID-000 eine Sollbruchstelle enthält, die durch Entfernen eines Teils des Plug-In eine weitere Miniaturisierung der Minichipkarte zuläßt, wobei die Ausbrechrichtung für das Plug-In in aus der ID-1-Karte und die Ausbrechrichtung für die miniaturisierte Minichipkarte verschieden sind.

In vorteilhafter Weise ist es dadurch möglich, daß aus der Karte im ID-1-Format das Plug-In im ID-000-Format ausgebrochen werden kann, ohne daß die Sollbruchlinie für die weitere Miniaturisierung bricht.

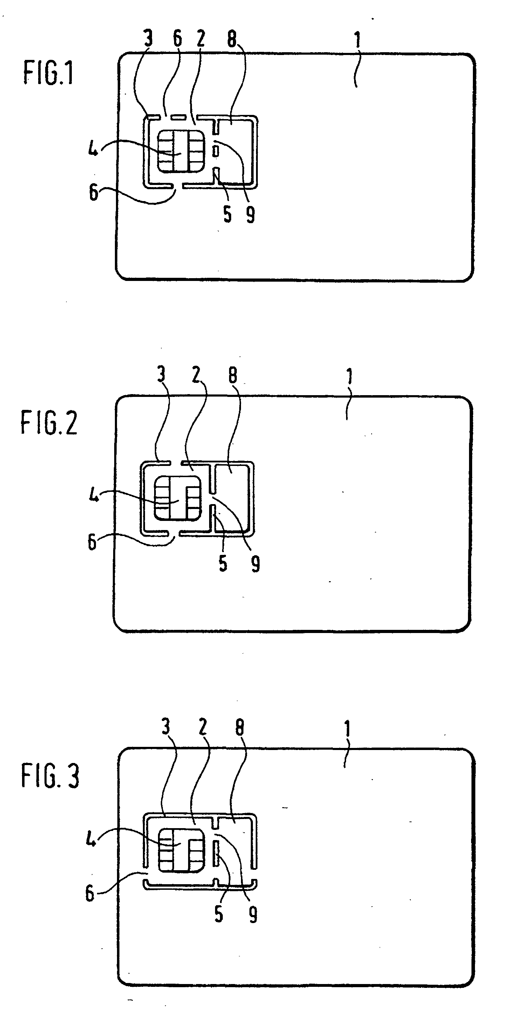

Im folgenden wird die Erfindung anhand der Figuren 1 bis 3 näher erläutert, welche verschiedene Ausführungsformen für die Freischnitte der Minichipkarte bzw. in der Minichipkarte zeigen.

In Figur 1 ist ein Kartenkörper 1 mit einem Plug-In 2, welches einen integrierten Schaltkreis und eine Kontaktfläche 4 enthält, dargestellt. Die Kontur des Plug-In 2 ist durch einen Freischnitt bzw. eine Ausstanzung 3 innerhalb des übrigen Kartenkörpers 1 definiert und lediglich über einen oder mehrere Stege 6 mit diesem verbunden. Die Stege 6 sind so ausgeführt, daß ein leichtes Ausbrechen des Plug-In 2 aus dem Kartenkörper 1 möglich ist. Innerhalb des Plug-In ist weiterhin ein Freischnitt 5 angeordnet, welcher eine weitere Verkleinerung des Plug-In durch Abbrechen des Reststückes 8 erlaubt. Der Freischnitt 5 mit den Stegen 9 weist eine andere Ausbrechrichtung auf als der Freischnitt 3 mit den Verbindungsstegen 6, so daß beim Ausbrechen des Plug-In 2 im Format ID-000 aus dem Kartenkörper 1 die Stege 9 nicht brechen. Nach dem Ausbrechen des Plug-In kann durch ein Knicken der Stege 9 eine nochmalige Verkleinerung der Minichipkarte erreicht werden.

In Figur 2 ist eine Chipkarte ähnlich der Fig. 1 dargestellt, wobei entlang des Freischnitts 5 lediglich ein Steg 9 vorgesehen ist. Weiterhin sind die Stege 6 gegenüber und außermittig angeordnet, um eine Hebelwirkung beim Herausbrechen der Karte zu erreichen.

Die Figur 3 zeigt eine weitere alternative Ausführungsform der Karte nach Fig. 1, bei der die beiden Stege 6, welche den Freischnitt 3 unterbrechen, parallel zu den langen Seiten der Karte angeordnet sind. In diesem Fall wird zum Ausbrechen Druck auf den oberen oder unteren Teil des Plug-In ausgeübt. Da der Freischnitt 5 durch zwei Stege unterbrochen ist, liegt an dieser Stelle die stabilere Verbindung vor, so daß zunächst das Plug-In herausbricht und anschließend der Teil 8 des Plug-In zur Erzeugung einer verkleinerten Minichipkarte abgebrochen werden kann.

Die Größe und Anzahl der Stege 6 bzw. 9 ist von der gewünschten Stabilität der fertiggestellten Karte abhängig. In vorteilhafter Weise sind die Stege 6, welche den Freischnitt 3 des Plug-In unterbrechen in den Randbereichen angeordnet. Auf diese Weise wird durch Ausnutzen einer Hebelwirkung das Herausbrechen des Plug-In erleichtert.

## Patentansprüche

1. Tragbarer Datenträger (1) mit einer ausbrechbaren Minichipkarte (2), wobei die Minichipkarte (2) durch einen Freischnitt (3), der sich über wesentliche Teile der Minichipkarte erstreckt, vom restlichen Kartenkörper weitgehend getrennt ist, **dadurch gekennzeichnet, daß** innerhalb der Minichipkarte (2) eine Sollbruchlinie (5) zur weiteren Verkleinerung der Minichipkarte (2) angeordnet ist, wobei die durch die Sollbruchlinie (2) vorgegebene Ausbrechrichtung für die Minichipkarte aus dem tragbaren Datenträger und die Ausbrechrichtung für die miniaturisierte Minichipkarte verschieden sind.

2. Tragbarer Datenträger nach Anspruch 1, **dadurch gekennzeichnet, daß** die Stege (6), welche die Freischnittlinie (3) unterbrechen, in den Randbereichen der Minichipkarte (2) auf gleicher Höhe angeordnet sind..

3. Tragbarer Datenträger nach Anspruch 1 oder 2, **dadurch gekennzeichnet, daß** die Stege (9) innerhalb der Minichipkarte eine höhere Festigkeit aufweisen als die Stege (6), welche die Minichipkarte mit dem restlichen Kartenkörper verbinden.

## Claims

1. A portable data carrier (1) with a break-out mini smart card (2), the mini smart card (2) being largely separated from the remaining card body by a free punch (3) extending over substantial parts of the mini smart card, **characterized in that** a rated breaking line (5) is disposed within the mini smart card (2) for further reducing the size of the mini smart card (2), the break-out direction given by the rated breaking line (2) for the mini smart card out of the portable data carrier being different from the break-out direction for the miniaturized mini smart card.

2. A portable data carrier according to claim 1, **characterized in that** the bars (6) interrupting the free punch line (3) are disposed in the edge areas of the mini smart card (2) at the same level.

3. A portable data carrier according to claim 1 or 2, **characterized in that** the bars (9) within the mini smart card have higher strength than the bars (6) connecting the mini smart card with the remaining card body.

## Revendications

1. Support de données (1) portatif avec une minicarte à puce (2) séparable par déchirement, la minicarte à puce (2) étant notablement séparée du reste du corps de carte au moyen d'une découpure libre (3) qui s'étend sur des parties essentielles de la minicarte à puce, **caractérisé en ce que**, à l'intérieur de la minicarte à puce (2), est ménagée une ligne destinée à la rupture (5) pour continuer la fragmentation de la minicarte à puce (2), la direction de déchirement, déterminée par la ligne destinée à la rupture (2) de la minicarte à puce, à partir du support de données portatif, et la direction de fracturation pour la minicarte à puce miniaturisée étant différente.

2. Support de données portatif selon la revendication 1, **caractérisé en ce que** les nervures (6), qui interrompent la ligne de découpure libre (3), sont ménagées à la même hauteur dans les zones de bordure de la minicarte à puce (2).

3. Support de données selon la revendication 1 ou 2, **caractérisé en ce que** les nervures (9) présentent à l'intérieur de la minicarte à puce une résistance plus élevée que les nervures (6), lesquelles relient la minicarte à puce au reste du corps de carte.
